# EUROPÄISCHE PATENTANMELDUNG

(11) **EP 2 818 950 A2**
(43) Veröffentlichungstag der Anmeldung: **31.12.2014**
(21) Anmeldenummer: 14172175.3
(22) Anmeldetag: 12.06.2014
(51) Int. Cl.: G05B 19/409, G05B 19/042

(54) **Vorrichtung zur Veränderung eines Parameterwerts einer Bearbeitungseinrichtung mittels einer graphischen Benutzerschnittstelle**

(30) Priorität: 21.06.2013 DE 102013211860
(71) Anmelder: Ellerbrock, Christof, 55218 Ingelheim (DE)
(72) Erfinder: Ellerbrock, Christof, 55218 Ingelheim (DE)
(74) Vertreter: Gulde & Partner

(57) **Zusammenfassung**

Es wird eine Vorrichtung für eine parametrisierbare Bearbeitungseinrichtung beschrieben, wobei die Bearbeitungseinrichtung zur Bearbeitung eines Rohlings mittels mindestens eines Bearbeitungswerkzeugs geeignet ist. Die erfindungsgemäß vorgestellte Vorrichtung umfasst eine graphische Benutzerschnittstelle zur Veränderung mindestens eines Parameterwertes der Bearbeitungseinrichtung. Die erfindungsgemäß vorgestellte Vorrichtung ist dadurch gekennzeichnet, dass die graphische Benutzerschnittstelle so ausgebildet ist, dass der Parameterwert durch Manipulation eines graphisch dargestellten Elements mittels einer Zeigevorrichtung verändert werden kann.

## Beschreibung

### Stand der Technik

Parametrisierbare Bearbeitungseinrichtungen wie beispielsweise computerunterstützte Fertigungsanlagen (CAM Systeme) werden in vielfältiger Weise eingesetzt. Ein Beispiel ist die Fertigung von Einzelstücken aus Rohlingen.

Um möglichst flexibel mit unterschiedlichen Bearbeitungsanforderungen umgehen zu können, sind parametrisierbare Bearbeitungseinrichtungen beispielsweise als 5 Achs Fräsmaschinen ausgebildet.

Für die Herstellung von Einzelstücken wie beispielsweise Zahnersatz (dentale CAM Programme) ist dieser Funktionsumfang allerdings meist nicht notwendig. Zudem erfordert die sich aus der Vielzahl von Achsen ergebende Komplexität Expertenwissen bei der Parametrisierung.

Dentale CAM Programme, die bezüglich geringster Fräszeit und höchster Fräserstandzeit hin optimiert sind, können beispielsweise auf industriell geprägten CAM Systemen aufsetzen. Nachteil der Optimierung bezüglich Fräszeit und Fräserstandzeit ist, dass sie dem Zahntechniker so gut wie keine Möglichkeiten bietet, in die Qualität der Fräsung einzugreifen.

Andererseits ist eine Parametrisierung, die auch die Qualität der hergestellten Einzelstücke optimiert, ohne Expertenwissen fast unmöglich, auch weil alle Parameteränderungen in Tabellen vorgenommen werden.

Die Erfindung befasst sich mit der Aufgabe, die Parametrisierung von Bearbeitungsmaschinen zu erleichtern.

Erfindungsgemäß wird daher eine Vorrichtung für eine parametrisierbare Bearbeitungseinrichtung vorgestellt, wobei die Bearbeitungseinrichtung zur Bearbeitung eines Rohlings mittels mindestens eines Bearbeitungswerkzeugs geeignet ist. Die erfindungsgemäß vorgestellte Vorrichtung umfasst eine graphische Benutzerschnittstelle zur Veränderung mindestens eines Parameterwertes der Bearbeitungseinrichtung. Die erfindungsgemäß vorgestellte Vorrichtung ist dadurch gekennzeichnet, dass die graphische Benutzerschnittstelle so ausgebildet ist, dass der Parameterwert durch Manipulation eines graphisch dargestellten Elements mittels einer Zeigevorrichtung verändert werden kann.

In einer Ausführungsform kann die Vorrichtung weiterhin ein Expertensystem umfassen, das ausgebildet ist, zu weiteren Parameterwerten der Bearbeitungseinrichtung mindestens einen Grenzwert für den veränderbaren Parameterwert zu bestimmen, und wobei die graphische Benutzerschnittstelle weiterhin ausgebildet ist, durch Veränderung der graphischen Darstellung des graphischen Elements eine Über- oder Unterschreitung des Grenzwertes infolge der Veränderung des veränderbaren Parameterwertes sichtbar zu machen.

Dabei kann der Grenzwert so gewählt sein, dass er einen ersten Parameterwertbereich des veränderbaren Parameterwertes von einem zweiten Parameterwertbereich des veränderbaren Parameterwertes trennt, wobei bei Verwendung eines Parameterwertes aus dem ersten Parameterwertbereich eine Beschädigung des Bearbeitungswerkzeugs nicht zu erwarten ist und bei Verwendung eines Parameterwertes aus dem zweiten Parameterwertbereich eine Beschädigung des Bearbeitungswerkzeugs zu erwarten ist.

Die Bearbeitungseinrichtung kann insbesondere zur Bearbeitung von mindestens einer Oberfläche des Rohlings geeignet sein. Dann kann die graphische Benutzerschnittstelle weiterhin ausgebildet sein, eine Veränderung der Bearbeitung der mindestens einer Oberfläche infolge der Veränderung des veränderbaren Parameterwertes graphisch darzustellen.

Die Bearbeitungseinrichtung kann insbesondere zur Herstellung eines Zahnersatzes geeignet sein und die mindestens eine Oberfläche kann eine Kauoberfläche, eine Fissuroberfläche, eine Außenseitenoberfläche oder eine Innenseitenoberfläche des Zahnersatzes sein.

Dann kann über die graphische Benutzerschnittstelle eingestellt werden, ob die Kauoberfläche, die Fissuroberfläche, die Außenseitenoberfläche oder eine Innenseitenoberfläche des Zahnersatzes bearbeitet werden soll, wobei die Bearbeitungseinrichtung zur Bearbeitung der unterschiedlichen Oberflächen unterschiedliche Bearbeitungswerkzeuge umfasst und wobei die graphische Benutzerschnittstelle weiterhin ausgebildet ist, eine Bezeichnung und/oder ein Bild des Bearbeitungswerkzeuges für die jeweilige Oberfläche darzustellen.

Die graphische Benutzerschnittstelle kann auch eine Auswahl des Bearbeitungswerkzeugs ermöglichen.

Dabei kann die Auswahl des Bearbeitungswerkzeugs zumindest durch Eingabe einer NC-Nummer erfolgen, wobei die NC-Nummer eine Position des ausgewählten Bearbeitungswerkzeugs in der Bearbeitungsvorrichtung angibt.

Dabei kann die graphische Benutzerschnittstelle ausgebildet sein, die unterschiedlichen Bearbeitungswerkzeuge der Bearbeitungsvorrichtung graphisch anzuzeigen und eine mittels der Zeigevorrichtung vorgenommene Auswahl eines der unterschiedlichen Bearbeitungswerkzeuge entgegenzunehmen.

Die Bearbeitungseinrichtung kann beispielsweise eine Fräse zum Abtragen von Material von dem Rohling umfassen und der veränderbare Parameterwert kann eine Drehzahl der Fräse, ein Vorschub der Fräse, einen Fräsbahnabstand oder eine Menge abzutragenden Materials sein.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 eine Darstellung auf einer graphischen Benutzeroberfläche nach Stand der Technik,
Figur 2 eine erste beispielhafte Darstellung auf einer graphischen Benutzeroberfläche, wie sie im Rahmen der vorliegenden Erfindung Verwendung finden kann,
Figur 3 eine zweite beispielhafte Darstellung auf einer graphischen Benutzeroberfläche, wie sie im Rahmen der vorliegenden Erfindung Verwendung finden kann,
Figur 4 eine dritte beispielhafte Darstellung auf einer graphischen Benutzeroberfläche, wie sie im Rahmen der vorliegenden Erfindung Verwendung finden kann,
Figur 5 eine vierte beispielhafte Darstellung auf einer graphischen Benutzeroberfläche, wie sie im Rahmen der vorliegenden Erfindung Verwendung finden kann,
Figur 6 eine fünfte beispielhafte Darstellung auf einer graphischen Benutzeroberfläche, wie sie im Rahmen der vorliegenden Erfindung Verwendung finden kann,
Figur 7 eine sechste beispielhafte Darstellung auf einer graphischen Benutzeroberfläche, wie sie im Rahmen der vorliegenden Erfindung Verwendung finden kann, und
Figur 8 eine siebte beispielhafte Darstellung auf einer graphischen Benutzeroberfläche, wie sie im Rahmen der vorliegenden Erfindung Verwendung finden kann.

### Ausführungsformen der Erfindung

Mit dem hier vorgestellten Ansatz soll es dem "normalen" Zahntechniker möglich sein, die CAM-Software mit einfachen Mitteln besser zu beherrschen und so ein besseres Ergebnis herstellen zu können. Dies wird mit der graphischen Darstellung von einzeln zu verändernden Parametern ermöglicht. Die hier beispielhaft vorgestellte Vorrichtung ist eine durch Steueranweisungen (Software) ertüchtigte Steuervorrichtung (Computer) mit graphischer Schnittstelle (Bildschirm) und Zeigevorrichtung (Maus), wobei die Software auf ein CAM-System aufsetzt und unter anderem eine grafische Bedienoberfläche, die auch als graphische Benutzerschnittstelle bezeichnet wird, für das CAM-System bereitstellt. Beispielsweise kann die Software in einem Speicher des CAM-Systems hinterlegt und von einer Rechnereinheit des CAM-Systems ausgeführt werden. Alternativ kann die Steuervorrichtung über eine Schnittstelle mit der Rechnereinheit des CAM-Systems kommunizieren.

Die grafische Bedienoberfläche des Ausführungsbeispiels kann besonders vorteilhaft im dentalen Bereich aber nicht nur dort genutzt werden. Sie erleichtert die Parametrisierung von CAM-Systemen für jedwede gewerbliche Anwendung beispielsweise auch im industriellen Bereich.

Zusätzlich zur grafischen Bedienoberfläche kann auch ein "Expertensystem" innerhalb der Software hinterlegt sein. Der in den Figuren beispielhaft dargestellte Arbeitsfluss bzw. die graphische Benutzeroberfläche und -führung kann in jede CAM-Software integriert werden bzw. auf entsprechende Schnittstellen von CAM-Systemen aufsetzen.

In einem Ausführungsbeispiel ist in die Software eine Fräserbibliothek hinterlegt, die im Ausführungsbeispiel zusätzlich optional per Update aktualisiert werden kann. Über die Eingabe der Herstellerartikelnummer wird dann der Fräser ausgewählt. Umgekehrt kann im Ausführungsbeispiel über die Eingabe von Fräserparametern, wie z.B. Durchmesser und Schaftlänge ein oder mehrere Fräser aus der Bibliothek herausgesucht werden, um diesen zu bestellen. Zusätzlich ist im Ausführungsbeispiel zu jedem Fräser ein Foto hinterlegt, das bei Fräserauswahl bzw. beim Anzeigen der Auswahl mit angezeigt wird.

Die Software kann zusätzlich die Möglichkeit zur Auswahl unterschiedliche Betriebsmodi umfassen. Mit der Auswahl des Modus ergeben sich unterschiedliche Möglichkeiten der Parameteränderung. So kann beispielsweise in einem "High Professional" Modus ein Fräser aus unterschiedlichen vorhandenen Fräsern ausgewählt werden, während in einem Modus "Professional" der zu verwendende Fräser vorgegeben sind.

Eine Änderung der Parameter erfolgt entweder graphisch oder durch eine direkte Eingabe eines Wertes. Als graphisches Element dient z.B. ein Schieberegler. Wird ein Parameter verändert, wird in einem separaten Bildschirmbereich die Veränderung der bearbeiteten Fläche angezeigt (z.B. eine glättere Oberfläche). Regelungselemente sind zum Beispiel für die folgenden Parameter bei der Bearbeitung von CAD-Konstruktionen vorgesehen:
Drehzahl
Vorschub
Zustellung (Fräsbahnabstand)
Aufmass (Material Auftrag bzw. Abtrag)

Im Ausführungsbeispiel muss nach Änderung mindestens eines Parameters die Änderung noch einmal separat bestätigt werden. Dies erhöht die Sicherheit vor Fehlparametrisierungen. Erst dann springt die Software in die nächste Auswahlmaske.

Ein Ablauf des Modus "Professional" am Beispiel Bearbeitung eines Rohlings zur Herstellung eines individuellen Zahnersatzes ist in den Figuren beispielhaft dargestellt.

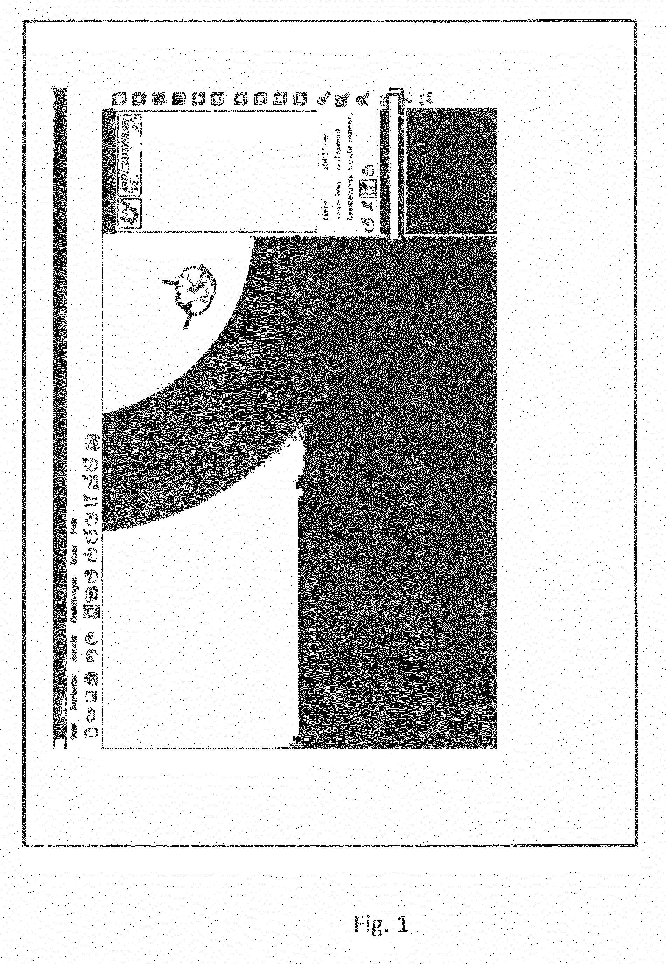

Im Folgenden wird ein Verfahren beschrieben, wie es unter Verwendung der erfindungsgemäßen Vorrichtung durchgeführt werden kann:
Zuerst wird ein zu fräsendes Werkstück in einem Materialblock einer parametrisierbaren Bearbeitungsvorrichtung platziert. Ein Beispiel für eine solche Bearbeitungsvorrichtung ist Hyperdent von der Firma Follow me. Die graphische Benutzerschnittstelle nach Stand der Technik ist in Figur 1 dargestellt.

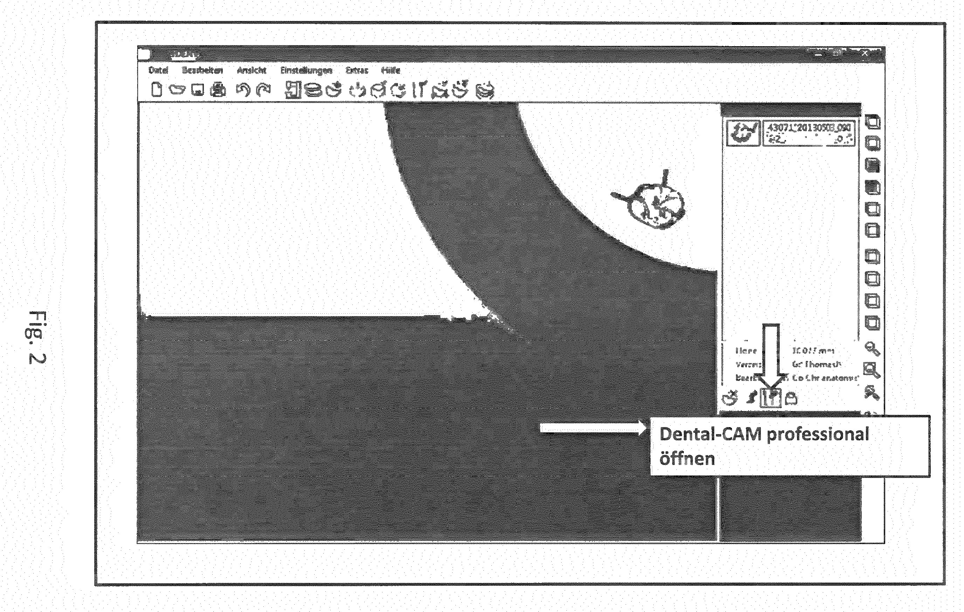

Dieser graphischen Benutzerschnittstelle fügt die Software ein Icon zum Öffnen der neuen graphischen Benutzerschnittstellen hinzu. Dies ist in Figur 2 dargestellt.

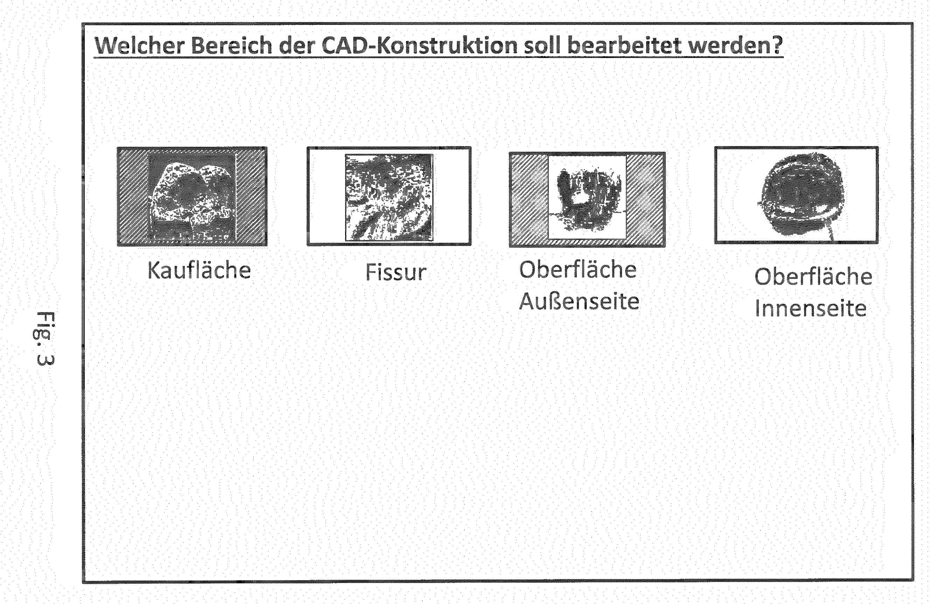

Wenn sich der Mauszeiger über dem Icon befindet, erscheint ein Fenster, in dem darüber informiert wird, dass das Anklicken des Icons die neuen graphischen Benutzerschnittstellen öffnet. Durch Anklicken des Icons springt die Software zur in Figur 3 dargestellten graphischen Benutzerschnittstelle.

Die in Figur 3 dargestellte graphische Benutzerschnittstelle ermöglicht eine Auswahl des Bereiches der CAD-Konstruktion, dessen Bearbeitung parametrisiert werden soll.

Mit dem Auswählen des zu bearbeitenden Bereiches wird automatisch die dafür vorgesehene Frässtrategie im Hintergrund der Software dupliziert, um diese verändern zu können. Dies geschieht, ohne dass der Anwender dies erkennen kann.

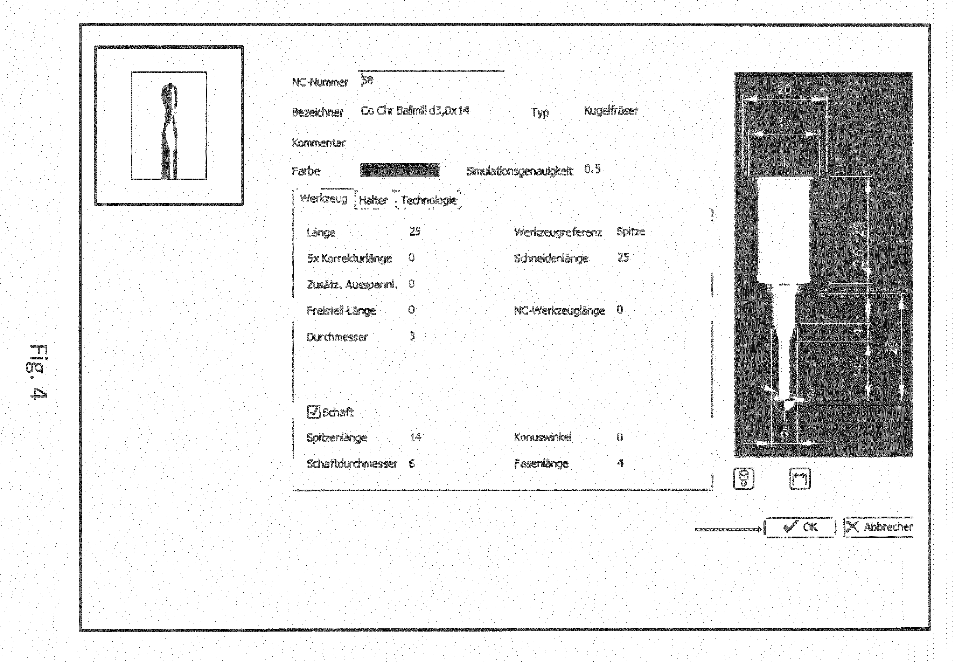

Es erscheint der für die Bearbeitung des entsprechenden Bereichs hinterlegte Fräser. Dies ist in Figur 4 dargestellt. Es werden Informationen zum Fräser dargestellt, etwa eine NC-Nummer, die die Position des Fräsers im CAM System angibt. Weitere Informationen können Typ, Länge, Werkzeugreferenz, Schneidenlänge, Durchmesser, Spitzenlänge, Schaftdurchmesser, Simulationsgenauigkeit und Faserlänge sein. Im Modus "Professional" ist der Fräser unveränderbar.

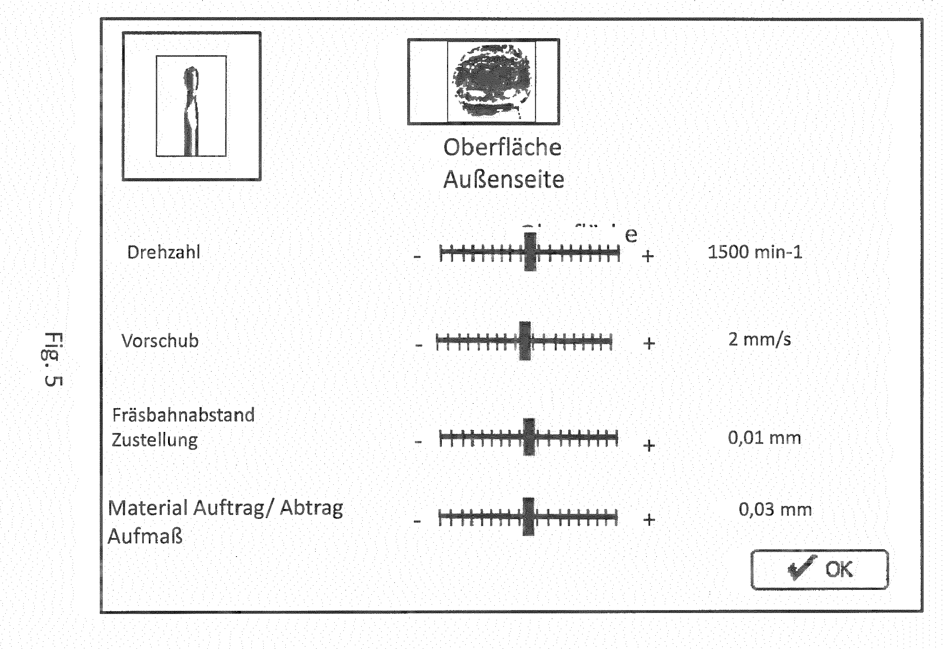

Es erscheint der in dieser Frässtrategie verwendete Fräser. Die Bezeichnung des Fräsers wird angezeigt und ein Foto des Fräsers. Erst durch Bestätigen mit OK wird die nächste Maske geöffnet, die in Figur 5 dargestellt ist.

Die in Figur 5 dargestellte Maske ermöglicht die Änderung der Bearbeitungsparameter im ausgewählten Konstruktionsbereich, hier im Beispiel "Oberfläche Außenseite".

Im in Figur 5 dargestellten Beispiel lassen sich folgende Bearbeitungsparameter ändern:
Drehzahl
Vorschub
Zustellung (Fräsbahnabstand)
Aufmass (Material Auf-, Abtrag)

Diese Parameter lassen sich über graphische Bedienelemente verändern. Im Beispiel sind dies Schieberegler. Drehregler sind ebenfalls möglich. Auch diskrete Auswahlsysteme sind möglich. Zusätzlich kann auch die direkte Eingabe oder Änderung numerischer Werte ermöglicht werden. In diesem Bereich ist im Beispiel im Hintergrund das Expertensystem hinterlegt. Dieses lässt nicht zu bzw. warnt davor, wenn für den Fräser Parameter eingegeben werden, die diesen beschädigen oder gar brechen lassen könnten. Die in dem Expertensystem (Datenbank) hinterlegten Parameter sind materialabhängig. Per Update kann diese Datenbank immer wieder angepasst werden, so dass neue Fräser bzw. neue Materialien hinterlegt werden können. Durch graphische, beispielsweise farbliche Änderung des graphischen Reglers wird der Benutzer darauf hingewiesen, wenn eine aktuelle Parameteränderung dazu führt, dass der Fräser gefährdet ist. In diesem Fenster wird der ausgewählte Fräser bildlich dargestellt als auch der ausgewählte Bearbeitungsbereich. Mit Veränderung der Parameter verändert sich auch die Darstellung des Bildes des Bearbeitungsbereiches, z.B. wird seine Oberfläche glatter.

Sind alle Parameter eingestellt muss die Eingabe wieder bestätigt werden.

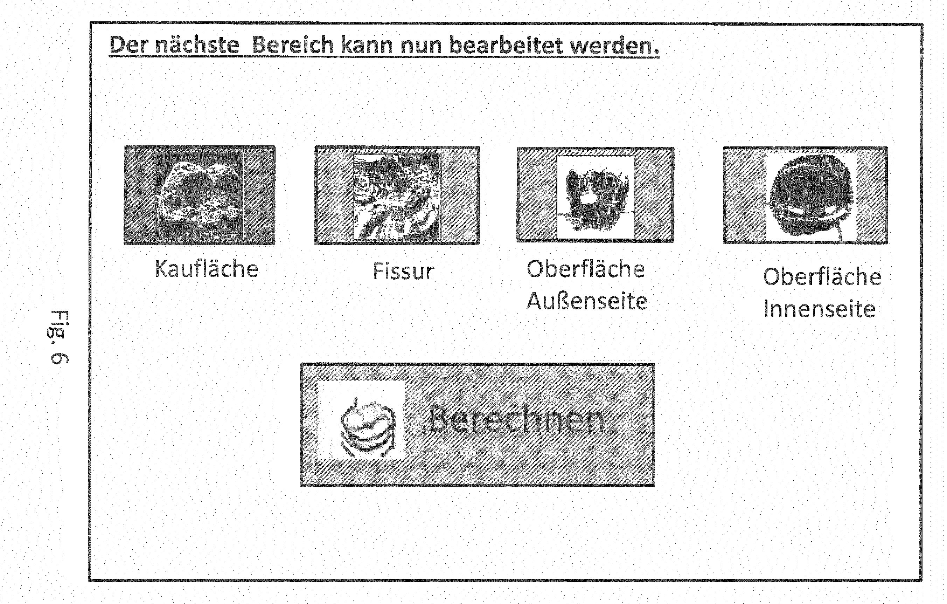

Figur 6 zeigt wieder die in Figur 3 dargestellte graphische Benutzerschnittstelle. Das Verfahren kehrt hierhin zurück und ermöglicht die Auswahl eines weiteren Bereichs der CAD-Konstruktion, dessen Bearbeitung parametrisiert werden soll.

Wurden die Bearbeitung eines oder mehrerer Bereiche der CAD-Konstruktion parametrisiert, so verändert sich die Darstellung des zugehörigen Symbols (zum Beispiel farbliche Änderung eines Rahmens oder Hintergrundbereichs des Symbols). Jetzt kann der Anwender auch entscheiden, ob weitere Bereiche geändert werden sollen, oder ob die Fräsbahnstrategie mit den vorhandenen Parametern berechnet werden soll.

Im "High Professional" Modus kann der für die Bearbeitung des entsprechenden Bereichs zu verwendende Fräser vom Anwender aus einer Menge unterschiedlicher und im CAM System verfügbaren Fräsern ausgewählt werden.

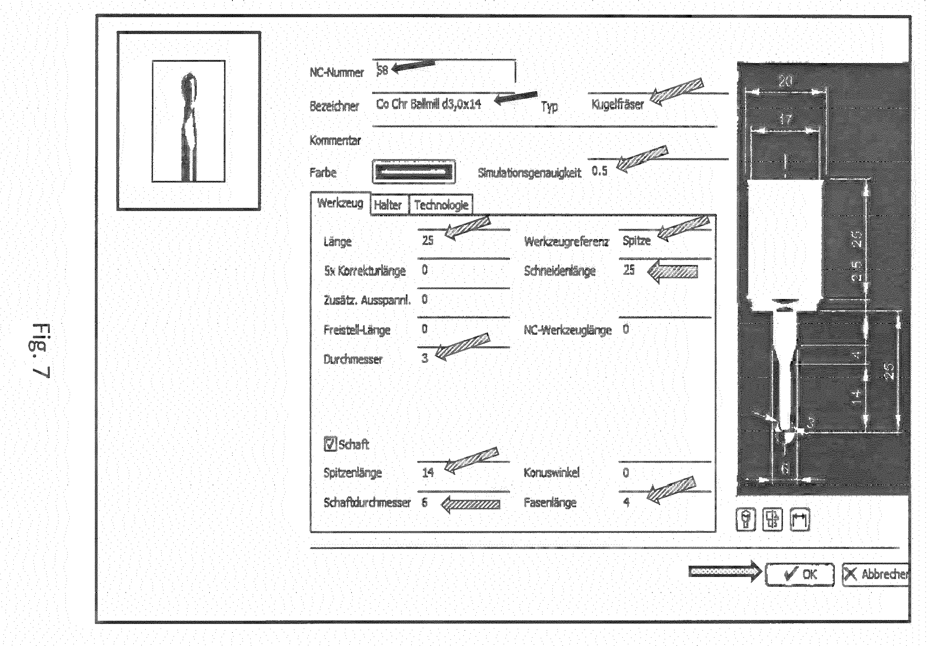

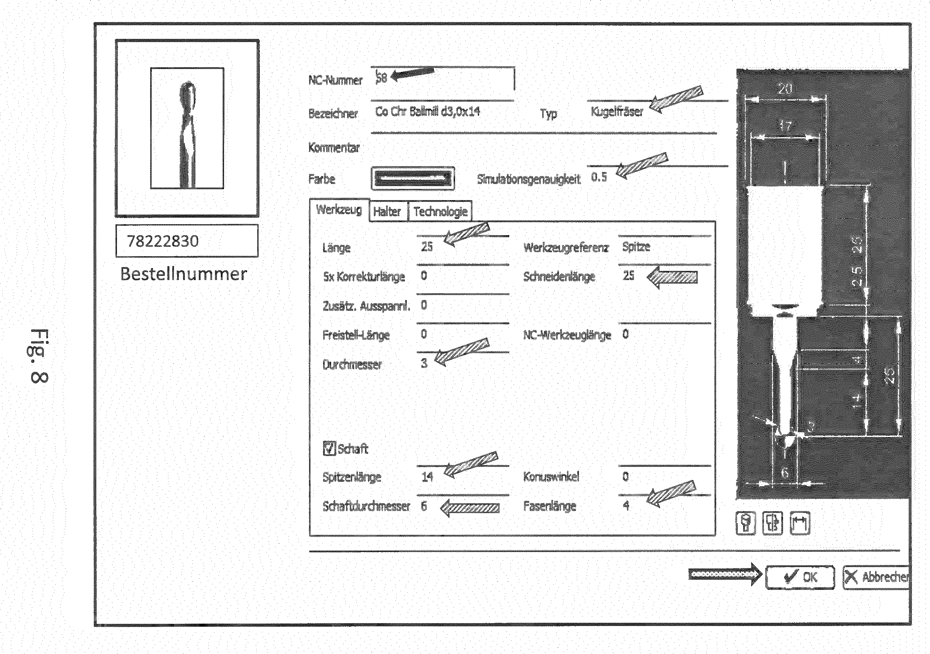

Er kann diesen Wechsel auf zwei Arten durchführen. Zum einen können alle benötigten Werkzeugdaten manuell eingetragen werden, wie dies in Figur 7 beispielhaft dargestellt ist. Alternativ kann, wie in Figur 8 dargestellt, ein Fräser durch die Eingabe seiner Seriennummer ausgewählt werden.

Sofern im Expertensystem nicht nur die im CAM System verfügbaren Fräser hinterlegt sind, muss bei beiden Eingabearten auch die Position, d.h. der Standplatz des Werkzeuges in der Maschine (NC-Nummer) eingegeben werden.

Das ausgewählte Werkzeug wird wieder realistisch graphisch dargestellt. Sind in der Fräserbibliothek mehrere Werkzeuge mit der gleichen Geometrie hinterlegt, werden diese alle graphisch mit Artikelnummer angezeigt und der Benutzer kann das vorhandene auswählen.

Wird die Artikelnummer eines Werkzeuges eingetragen, werden aus der Bibliothek heraus alle Werkzeugparameter automatisch übernommen. Nur die Position (NC-Nummer) ist dann in diesem Falle einzutragen.

Ist das Werkzeug ausgewählt, muss die Auswahl wieder bestätigt werden.

Für jeden Bereich der Oberflächenbearbeitung der CAD-Konstruktion kann dabei ein Bearbeitungswerkzeug individuell definiert werden.

Das Expertensystem kann aber vorteilhafter Weise Daten zu möglichst allen marktverfügbaren und grundsätzlich geeigneten Bearbeitungswerkzeugen umfassen, wobei die Daten über automatische Updates aktuell gehalten werden. Dann benötigt die Vorrichtung eine entsprechende Schnittstelle für das Update, etwa eine Internetverbindung.

## Patentansprüche

1. Vorrichtung für eine parametrisierbare Bearbeitungseinrichtung zur Bearbeitung eines Rohlings mittels mindestens eines Bearbeitungswerkzeugs, umfassend: eine graphische Benutzerschnittstelle zur Veränderung mindestens eines Parameterwertes der Bearbeitungseinrichtung, **dadurch gekennzeichnet, dass** die graphische Benutzerschnittstelle so ausgebildet ist, dass der Parameterwert durch Manipulation eines graphisch dargestellten Elements mittels einer Zeigevorrichtung verändert werden kann.

2. Vorrichtung nach Anspruch 1, wobei die Vorrichtung weiterhin ein Expertensystem umfasst, das ausgebildet ist, zu weiteren Parameterwerten der Bearbeitungseinrichtung mindestens einen Grenzwert für den veränderbaren Parameterwert zu bestimmen und wobei die graphische Benutzerschnittstelle weiterhin ausgebildet ist, durch Veränderung der graphischen Darstellung des graphischen Elements eine Über- oder Unterschreitung des Grenzwertes infolge der Veränderung des veränderbaren Parameterwertes sichtbar zu machen

3. Vorrichtung nach Anspruch 2, wobei der Grenzwert so gewählt ist, dass er einen ersten Parameterwertbereich des veränderbaren Parameterwertes von einem zweiten Parameterwertbereich des veränderbaren Parameterwertes, wobei bei Verwendung eines Parameterwertes aus dem ersten Parameterwertbereich eine Beschädigung des Bearbeitungswerkzeugs nicht zu erwarten ist und im zweiten Parameterwertbereich eine Beschädigung des Bearbeitungswerkzeugs zu erwarten ist.

4. Vorrichtung nach Anspruch 1 oder 2, wobei die Bearbeitungseinrichtung zur Bearbeitung von mindestens einer Oberfläche des Rohlings dient und wobei die graphische Benutzerschnittstelle weiterhin ausgebildet ist, eine Veränderung der Bearbeitung der mindestens einen Oberfläche infolge der Veränderung des veränderbaren Parameterwertes graphisch darzustellen.

5. Vorrichtung nach Anspruch 3, wobei die Bearbeitungseinrichtung zur Herstellung eines Zahnersatzes dient und die mindestens eine Oberfläche eine Kauoberfläche, eine Fissuroberfläche, eine Außenseitenoberfläche oder eine Innenseitenoberfläche des Zahnersatzes ist.

6. Vorrichtung nach Anspruch 4, wobei über die graphische Benutzerschnittstelle eingestellt werden kann, ob die Kauoberfläche, die Fissuroberfläche, die Außenseitenoberfläche oder eine Innenseitenoberfläche des Zahnersatzes bearbeitet werden soll, wobei die Bearbeitungseinrichtung zur Bearbeitung der unterschiedlichen Oberflächen unterschiedliche Bearbeitungswerkzeuge umfasst und wobei die graphische Benutzerschnittstelle weiterhin ausgebildet ist, eine Bezeichnung und/oder ein Bild des Bearbeitungswerkzeuges für die jeweilige Oberfläche darzustellen.

7. Vorrichtung nach Anspruch 6, wobei über die graphische Benutzerschnittstelle auch das Bearbeitungswerkzeug ausgewählt werden kann.

8. Vorrichtung nach Anspruch 7, wobei über die Auswahl des Bearbeitungswerkzeugs zumindest durch Eingabe einer NC-Nummer erfolgt, die eine Position des ausgewählten Bearbeitungswerkzeugs in der Bearbeitungsvorrichtung angibt.

9. Vorrichtung nach Anspruch 8, wobei die graphische Benutzerschnittstelle ausgebildet ist, die unterschiedlichen Bearbeitungswerkzeuge der Bearbeitungsvorrichtung graphisch anzuzeigen und eine mittels der Zeigevorrichtung vorgenommene Auswahl eines der unterschiedlichen Bearbeitungswerkzeuge entgegenzunehmen.

10. Vorrichtung nach einem der vorangehenden Ansprüche, wobei die Bearbeitungseinrichtung eine Fräse zum Abtragen von Material von dem Rohling umfasst und der veränderbare Parameterwert eine Drehzahl der Fräse, ein Vorschub der Fräse, einen Fräsbahnabstand oder eine Menge abzutragenden Materials ist.
